# FASCICULE DE BREVET EUROPEEN

(11) **EP 3 012 163 B1**
(45) Date de publication et mention de la délivrance du brevet: **01.04.2020**
(21) Numéro de dépôt: 15186758.7
(22) Date de dépôt: 24.09.2015
(51) Int. Cl.: B60S 1/40, B60S 1/52, B60S 1/38

(54) **DISPOSITIF DE PROJECTION DE LIQUIDE LAVE-GLACE POUR UN BALAI D ESSUYAGE DE SYSTÈME D ESSUIE-GLACE DE VÉHICULE**
VORRICHTUNG ZUM SPRITZEN VON SCHEIBENWASCHFLÜSSIGKEIT FÜR EINEN SCHEIBENWISCHERARM DES SCHEIBENWISCHERSYSTEMS EINES FAHRZEUGS
DEVICE FOR SPRAYING WINDSCREEN WASHER LIQUID FOR A WIPER OF A VEHICLE WINDSCREEN WIPING SYSTEM

(30) Priorité: 24.10.2014 FR 1460242
(43) Date de publication de la demande: 27.04.2016
(73) Titulaire: Valeo Systèmes d'Essuyage, 78322 Le Mesnil Saint Denis (FR)
(72) Inventeur: JARASSON, Jean-Michel, 78321 LE MESNIL SAINT DENIS (FR); IZABEL, Vincent, 91380 CHILLY MAZARIN (FR); CAILLOT, Gérald, 78720 CERNAY LA VILLE (FR)
(74) Mandataire: Valeo Systèmes d'Essuyage

(56) Documents cités:
- EP-A1- 1 918 167
- WO-A1-2013/186503
- FR-A1- 2 747 090
- FR-A1- 2 752 798
- FR-A1- 3 003 220

## Description

La présente invention concerne un dispositif de projection de liquide lave-glace pour un balai d'essuyage de système d'essuie-glace de véhicule, en particulier automobile, le balai d'essuyage et le système d'essuie-glace ainsi équipés.

Les automobiles sont couramment équipées de systèmes d'essuie-glace pour assurer un essuyage et un lavage du pare-brise et éviter que la vision qu'a le conducteur de son environnement ne soit perturbée. Ces systèmes comprennent des bras effectuant un mouvement de va-et-vient angulaire, au bout desquels sont installés des balais d'essuyage allongés, porteurs eux-mêmes de lames racleuses réalisées en une matière élastique. Les lames frottent contre le pare-brise et évacuent l'eau en l'amenant en dehors du champ de vision du conducteur.

Les systèmes d'essuie-glace peuvent comprendre des moyens de projection de liquide lave-glace sur le pare-brise. Ces moyens de projection peut être situés sur le capot, sur la grille de baie de pare-brise ou, dans une version plus récente, sur les balais d'essuyage, ceci en particulier pour les balais de type plat ou « flat blade » en anglais, c'est-à-dire, pour les balais présentant par eux-mêmes un cintrage leur permettant d'être montés sur les bras sans l'intermédiaire d'étriers ou de palonniers.

Dans le cas de moyens de projection intégrés au balai, le liquide lave-glace est acheminé jusqu'aux moyens de projection, tels que des buses, par des canalisations qui sont fixées sur le bras et sont raccordées à un système de distribution du liquide, qui est en général intégré aux moyens de connexion permettant d'établir une liaison articulée entre le bras et le balai. Ce système de distribution et les moyens de connexion sont ainsi relativement complexes à réaliser et donc coûteux.

Pour remédier à ce problème, on a déjà proposé d'équiper un balai d'essuyage d'un dispositif embarqué de projection de liquide, c'est-à-dire d'un dispositif rapporté sur le balai, ce dispositif étant relié directement à une canalisation d'amenée de liquide lave-glace. FR-A-3003220 montre le préambule des revendications 1 et 14. Ce dispositif de projection est alors équipé de moyens de fixation sur le balai. Toutefois, on a constaté que la fixation du dispositif sur le balai n'est pas toujours efficace et qu'il existe donc un risque de perte du dispositif, ce qui est problématique en particulier en cours de fonctionnement du système d'essuyage.

L'invention propose une solution simple, efficace et économique aux problèmes des technologies antérieures.

Il est proposé à cet effet un dispositif de projection de liquide lave-glace pour un balai d'essuyage de système d'essuie-glace de véhicule, comportant des moyens de projection de liquide lave-glace et des moyens de fixation audit balai d'essuyage, caractérisé en ce que les moyens de fixation sont configurés pour être mis en prise entre des moyens de connexion du balai d'essuyage à un bras d'essuie-glace et ledit bras d'essuie-glace.

Par « mis en prise », on entend que ledit balai d'essuyage et que ledit bras d'essuie-glace assurent une tenue mécanique dudit dispositif de projection de liquide lave-glace. Ledit dispositif de projection est ainsi « pris en sandwich » entre les moyens de connexion du balai au bras et ledit bras d'essuie-glace.

La mise en prise des moyens de fixation du dispositif entre les moyens de connexion du balai et le bras d'essuie-glace assure une bonne fixation du dispositif et limite le risque de désolidarisation du dispositif vis-à-vis du balai, tant que ce dernier est fixé au bras. Ainsi, le bras participe à la fixation du dispositif. Il peut avoir un rôle de simple maintien ou de retenue des moyens de fixation du dispositif sur les moyens de connexion, par exemple un maintien positif avec contact ou un maintien sécuritaire, formant par exemple butée empêchant tant le retrait du dispositif par vandalisme que le retrait en cours de fonctionnement si les moyens de fixation du dispositif venaient à céder.

La fixation du dispositif est avantageusement réversible.

On facilite de la sorte le montage du dispositif sur le balai, la fixation du dispositif sur le balai étant réalisée au montage du balai sur le bras et la dépose du dispositif, pour son éventuel échange, peut être assurée au démontage du balai du bras.

Selon d'autres caractéristiques de l'invention qui peuvent être prises ensemble ou séparément :
- les moyens de fixation ont une forme de U renversé,
- les moyens de fixation comprennent des surfaces de guidage configurées pour coopérer avec les moyens de connexion lors du montage du dispositif, ce qui facilite le montage du dispositif,
- les moyens de projection comprennent au moins une rampe de projection de liquide lave-glace,
- le dispositif comprend une canule de raccordement des moyens de projection à un conduit d'amenée de liquide lave-glace,
- les moyens de projection et les moyens de fixation sont formés en une seule pièce, ce qui facilite la fabrication du dispositif.

L'invention concerne également un balai d'essuyage pour un système d'essuie-glace de véhicule comprenant des moyens de connexion à un bras d'essuie-glace et un dispositif tel que décrit ci-dessus.

Selon d'autres caractéristiques de l'invention qui peuvent être prises ensemble ou séparément :
- les moyens de fixation du dispositif sont montés à cheval sur les moyens de connexion et comprennent deux branches latérales et sensiblement parallèles s'étendant de part et d'autre des moyens de connexion,
- les branches des moyens de fixation du dispositif sont montées par coulissement dans des gorges latérales des moyens de connexion,
- les branches comprennent des surfaces de guidage, configurées pour coopérer avec des gorges des moyens de connexion,
- les moyens de connexion comprennent un adaptateur articulé sur un connecteur mécanique du balai, les moyens de fixation du dispositif étant configurés pour être montés sur ledit adaptateur, et
- les moyens de connexion comprennent des moyens de verrouillage configurés pour coopérer avec le bras et assurer à la fois le verrouillage du balai et du dispositif vis-à-vis du bras.

L'invention concerne également un système d'essuie-glace de véhicule comportant un tel balai et un bras d'essuie-glace, le bras comprenant une pièce terminale de fixation aux moyens de connexion du balai, cette pièce terminale étant configurée pour coiffer les moyens de fixation du dispositif et assurer leur retenue sur les moyens de connexion du balai.

L'invention concerne encore un procédé de montage d'un dispositif de projection de liquide lave-glace sur un balai d'essuyage de système d'essuie-glace de véhicule, comprenant les étapes de montage de moyens de fixation du dispositif au niveau de moyens de connexion du balai d'essuyage à un bras d'essuie-glace, et de montage du bras sur ces moyens de connexion, de sorte que les moyens de fixation du dispositif soient mis en prise entre les moyens de connexion et le bras.

Avantageusement, le verrouillage des moyens de connexion vis-à-vis du bras entraîne le verrouillage du dispositif vis-à-vis du bras.

D'autres caractéristiques et avantages de l'invention apparaîtront à la lecture de la description qui suit d'un exemple de réalisation donné à titre illustratif en référence aux figures annexées. Sur ces figures :
- la figure 1 est une vue éclatée en perspective d'un système d'essuyage selon l'art antérieur,
- la figure 2 est une vue en perspective d'un balai d'essuyage selon l'invention, et représente une étape de montage d'un dispositif de projection de liquide lave-glace sur ce balai,
- les figures 3 et 4 sont d'autres vues en perspective du balai d'essuyage de la figure 2,
- la figure 5 est une vue en perspective et à plus grande échelle d'un système d'essuie-glace comprenant le balai d'essuyage de la figure 2 et un bras d'essuie-glace, et
- la figure 6 est une vue en perspective d'un adaptateur de moyens de connexion du balai d'essuyage au bras d'essuie-glace.

Il faut noter que les figures exposent l'invention de manière détaillée pour mettre en œuvre l'invention, lesdites figures pouvant bien entendu servir à mieux définir l'invention le cas échéant.

Dans la description qui suit, des références numériques identiques sont utilisées pour désigner des éléments identiques ou analogues. Les dénominations longitudinales ou latérales se réfèrent à l'orientation du balai d'essuyage selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur le bras d'essuie-glace, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

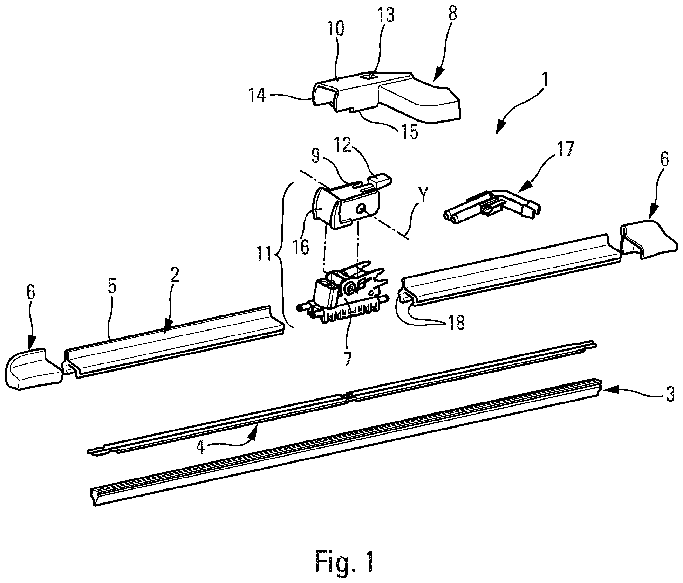

Il est illustré à la figure 1 un système selon l'art antérieur d'essuie-glace de pare-brise d'un véhicule, en particulier automobile. Ce système comprend un balai 1 d'essuyage du pare-brise et un bras 8 d'essuie-glace qui est partiellement représenté et destiné à être entraîné par des moyens motorisés pour suivre un mouvement angulaire de va et vient permettant d'évacuer l'eau et éventuellement d'autres éléments indésirables recouvrant le pare-brise.

Le balai 1 est ici un balai plat, c'est-à-dire du type comprenant une armature longitudinale 2, une lame d'essuyage 3, en général en caoutchouc, et au moins une vertèbre 4 (deux dans cet exemple) qui confère un cintrage à la lame d'essuyage 3 de manière à favoriser l'application de cette lame sur le pare-brise.

L'armature 2 du balai 1 comporte un aileron supérieur 5, aussi appelé déflecteur (ou « spoiler » en anglais), destiné à améliorer le plaquage du balai sur le pare-brise et donc la performance aérodynamique du système.

Le balai 1 comprend en outre des embouts ou agrafes d'accrochage 6 de la lame d'essuyage 3 et de la vertèbre 4 sur l'armature 2, ces agrafes étant situées à chacune des extrémités longitudinales de l'armature 2.

L'armature 2 du balai est ici réalisée en deux parties indépendantes qui sont disposées sensiblement bout à bout et raccordées l'une à l'autre par un connecteur 7 intermédiaire. Ce connecteur 7 est donc disposé entre les deux parties de l'armature 2 et comprend dans cet exemple des moyens de fixation à ces parties 2 tels que des moyens d'emboîtement ou de sertissage coopérant avec des moyens complémentaires des parties de l'armature 2 Dans cet exemple de réalisation et comme décrit ci-dessous, le connecteur 7 assure une continuité entre les canaux hydrauliques 18 des armatures 2. Les armatures sont fixées sur les vertèbres 4 de cintrage sur tout ou partie de leur longueur.

Selon une autre variante de réalisation (non représentée), la ou les armatures 2 peuvent également être directement intégrées à la lame d'essuyage 3.

Selon une encore autre variante de réalisation (non représentée), les armatures 2 sont raccordées de façon amovible aux vertèbres 4 et ne sont pas fixées au connecteur 7.

Pour assurer son montage sur le bras 8, le balai 1 comprend un adaptateur 9 monté sur le connecteur 7 et permettant une articulation du balai 1 par rapport au bras 8. L'articulation du balai 1 par rapport au bras 8 est une articulation selon un mouvement de rotation autour d'un axe de rotation Y perpendiculaire à l'axe longitudinal du balai 1. Le balai 1 doit en effet présenter au moins un degré de liberté en rotation par rapport au bras 8, et plus spécifiquement par rapport à une pièce terminale 10 du bras 8, pour permettre au balai 1 de suivre la courbure du pare-brise.

L'adaptateur 9 est monté libre en articulation sur le connecteur 7 autour de l'axe de rotation Y et forme avec le connecteur 7 des moyens 11 de connexion du balai 1 au bras 8.

L'adaptateur 9 est configuré pour permettre un montage et un démontage du balai 1 sur le bras 8. Plus précisément, l'adaptateur 9 est configuré pour s'insérer dans la pièce terminale 10 du bras par un mouvement de translation selon un axe longitudinal d'extension de la pièce terminale 10, pour venir en position d'utilisation, où il est situé en butée contre la pièce terminale 10 dans laquelle il est fixé de façon réversible au moyen d'un bouton escamotable 12 de verrouillage, qui est situé à une extrémité distale d'une patte flexible et qui coopère avec un évidement 13 de la pièce terminale 10. Dans cette position, la pièce terminale 10 forme une chape qui recouvre l'adaptateur 9.

La pièce terminale 10 du bras 8 présente ici une forme en U renversé où l'ouverture de cette forme en U fait face au pare-brise. La forme de l'adaptateur 9 est complémentaire, extérieurement, au volume interne de la pièce terminale 10, de sorte à venir se loger dans cette dernière. Lors de la mise en place du balai 1 dans le bras 8, l'adaptateur 9 est introduit dans la pièce terminale 10 par une ouverture 14 prévue à l'extrémité distale ou extérieure de cette dernière et guidé par des rebords 15 de ses flancs latéraux, dirigés vers l'intérieur de la pièce terminale 10. L'adaptateur 9 présente une extrémité 16, dénommée casquette, fermant l'ouverture 14 et formant l'extrémité distale du bras 8.

Le système de l'art antérieur représenté en figure 1 comprend en outre des moyens de projection de liquide lave-glace sur le pare-brise, ces moyens de projection étant reliés à des moyens d'amenée de liquide lave-glace.

Les moyens de projection comprennent ici des buses, non visibles, réparties le long du balai 1, sur chacun de ses côtés pour permettre une projection du liquide vers l'avant, ou l'arrière, quel que soit le sens de rotation du bras 8.

Les moyens d'amenée comprennent un raccord hydraulique 17 monté sur le connecteur 7 qui comprend des canaux internes de raccordement du raccord 17 à des canaux 18 réalisés dans l'armature 2, ces canaux 18 permettant de distribuer le liquide lave-glace jusqu'aux buses précitées.

Dans ce cas, le connecteur 7 peut être considéré comme un connecteur mécanique et hydraulique car il assure à la fois des fonctions mécanique (notamment de liaison du connecteur 7 avec la ou les vertèbres 4 de cintrage, mais aussi la fixation des parties de la ou les armatures 2 du balai 1) et hydraulique (de circulation de liquide lave-glace).

Ce type de système d'essuyage est relativement coûteux en particulier à cause des moyens de projection de liquide lave-glace qui sont intégrés au balai et entraînent l'utilisation d'un connecteur 7 complexe.

L'invention permet de remédier à ce problème grâce à un dispositif de projection de liquide lave-glace destiné à être rapporté sur un balai d'essuyage, ce type de dispositif étant donc du type embarqué sur le balai et non pas intégré à celui-ci.

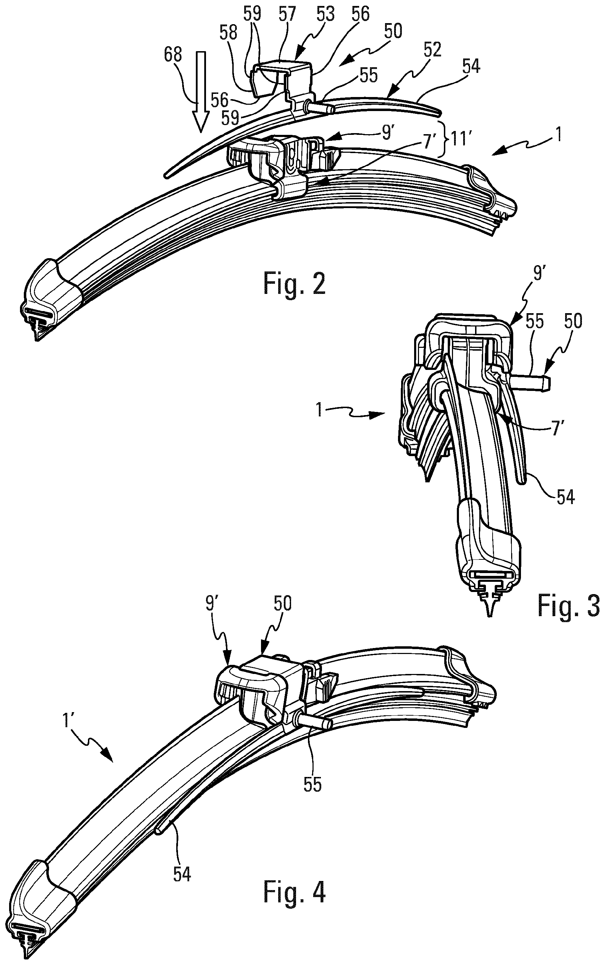

On se réfère désormais aux figures 2 à 6 qui représentent un mode de réalisation de l'invention. Dans ces figures, le balai 1' peut être du même type que celui décrit dans ce qui précède ou peut être simplifié. En particulier, son connecteur 7' peut n'être qu'un connecteur mécanique et non pas un connecteur mécanique et hydraulique. Autrement dit, dans le cas où le balai 1' ne comprend pas de moyens de projection de liquide lave-glace intégrés, c'est-à-dire que le dispositif de projection selon l'invention constitue les seuls moyens de projection de liquide lave-glace du balai, le connecteur 7' de ce balai peut ne pas comporter de canaux internes de circulation de liquide lave-glace et donc être plus facile et moins coûteux à réaliser que celui décrit dans ce qui précède.

L'invention n'est donc pas dépendante d'un type ou d'une forme de connecteur ou d'adaptateur en particulier, et des variantes telles que celles illustrées à la figure 1 d'une part, et aux figures 2-6 d'autre part, sont possibles selon l'invention.

Le dispositif de projection 50 selon l'invention comporte des moyens 52 de projection de liquide lave-glace et des moyens 53 de fixation au balai d'essuyage 1', ces moyens de fixation 53 étant configurés pour être mis en prise entre les moyens 11' de connexion du balai 1' au bras 8' d'essuie-glace et le bras 8'.

Les moyens de connexion 11' et le bras 8' sont analogues à ceux décrits dans ce qui précède, et comprennent un connecteur 7' et un adaptateur 9' articulé sur le connecteur.

Les moyens de projection 52 du dispositif 50 comprennent ici au moins une rampe 54 de projection de liquide lave-glace, qui a une forme allongée et légèrement incurvée dans l'exemple représenté. En position de montage, la rampe 54 s'étend le long d'une partie du balai 1', sensiblement parallèlement au balai et sur un côté de ce dernier. Elle est par exemple située en avant du balai 1' pour projeter du liquide lave-glace dans le sens montant de mouvement du balai.

Selon un mode de réalisation non représenté, le balai peut également être configuré pour recevoir une rampe de projection de liquide lave-glace de chacun des deux côtés longitudinaux du balai, de sorte à assurer un arrosage dans les sens montant et descendants d'essuyage, lorsque le moteur d'essuie-glace est configuré pour effectuer un mouvement rotatif de va-et-vient.

La rampe 54 comprend au moins un canal longitudinal interne (non visible) de distribution de liquide lave-glace à des buses de pulvérisation (non visibles) qui sont réparties le long de la rampe. En position de montage du dispositif, ces buses peuvent être orientées de façon à ce que le liquide sortant soit pulvérisé vers le pare-brise ou vers le balai 1'.

Le canal interne de la rampe 54 est relié à une extrémité d'une canule 55 d'alimentation en liquide lave-glace, l'extrémité opposée de cette canule 55 étant reliée par un conduit (non représenté) à une pompe et à un récipient de liquide lave-glace (également non représentés).

La canule 55 est ici disposée sensiblement au milieu de la rampe 54 et s'étend sensiblement perpendiculairement à celle-ci vers l'avant, son extrémité libre avant comportant par exemple des moyens d'emboîtement d'une extrémité du conduit précité.

Selon une variante de réalisation préférée (non représentée), la canule 55 s'étend sensiblement parallèlement à l'axe longitudinal du balai, ce qui permet de limiter l'encombrement pris par le conduit après assemblage, comparativement à l'exemple représenté.

Les moyens de fixation 53 du dispositif ont ici une forme générale en U renversé et comprennent deux branches latérales 56 sensiblement parallèles et à distance l'une de l'autre et dont les bords supérieurs sont reliés entre eux par une paroi supérieure 57.

Chaque branche 56 comprend au niveau de ses bords intérieur et extérieur, respectivement, des surfaces latérales 58, 59 de guidage et de centrage aptes à coopérer avec les moyens de connexion 11' lors du montage du dispositif 50. Plus précisément, les bords intérieur et extérieur de chaque branche 56 sont conformés pour définir des dents en saillie comportant chacune une surface inférieure 58 de guidage qui est inclinée, et une surface supérieure 59 de centrage, les surfaces de guidage 58 des dents d'une même branche convergeant vers le bas et ses surfaces supérieures 59 étant sensiblement parallèles.

La rampe 54 est ici reliée au bord inférieur de l'une des branches 56. Dans l'exemple représenté, les moyens de fixation 53, la rampe 54 et la canule 55 sont formés d'une seule pièce, par exemple en matériau plastique.

Alternativement, la rampe 54 peut également comprendre des buses de pulvérisation rapportées sur la rampe 54 et reliées à son canal longitudinal interne.

Les moyens de fixation 53 sont ici configurés pour être montés à cheval sur l'adaptateur 9' des moyens de connexion 11' et pour être mis en prise entre cet adaptateur et la pièce terminale 10' du bras 8'.

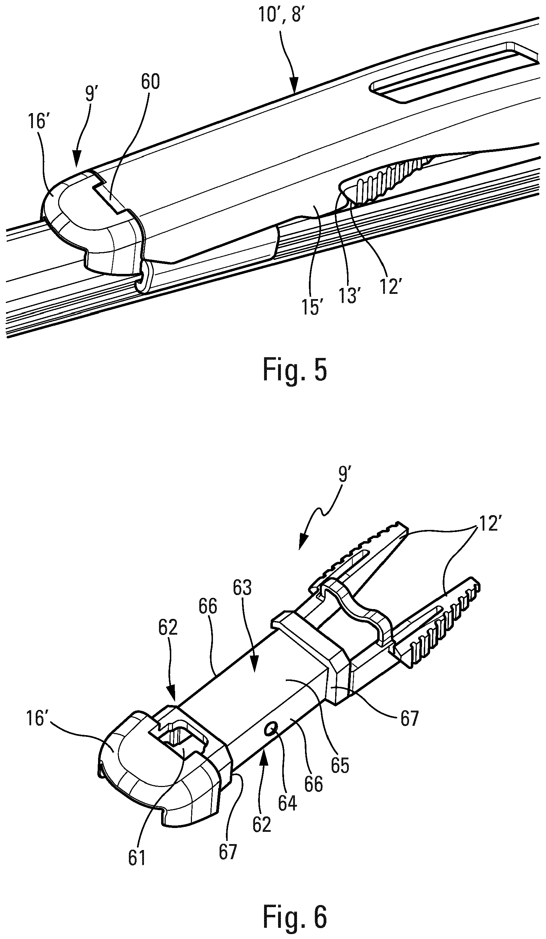

Les figures 5 et 6 montrent la pièce terminale 10' du bras 8' et l'adaptateur 9' du système selon l'invention, respectivement.

La pièce terminale 10' du bras 8' présente une forme en U renversé où l'ouverture de cette forme en U fait face au pare-brise. La forme de l'adaptateur 9' est sensiblement complémentaire, extérieurement, au volume interne de la pièce terminale 10', de sorte à venir se loger dans cette dernière. Lors de la mise en place du balai 1' dans le bras 8', l'adaptateur 9' est introduit dans la pièce terminale 10' par une ouverture prévue à l'extrémité distale ou extérieure de cette dernière et guidé par des rebords 15' de ses flancs latéraux, dirigés dans cet exemple vers le bas de la pièce terminale 10', c'est-à-dire vers le pare-brise. Ces rebords 15' comportent des encoches 13' de réception de boutons escamotables 12' de verrouillage, qui sont chacun situés à une extrémité distale d'une patte flexible (figure 6). Dans cet exemple de réalisation, les boutons escamotables 12' comprennent chacun une fente (non référencée) facilitant le démoulage de l'adaptateur 9 lorsque celui-ci est réalisé en plastique, et lesdites pattes flexibles sont en outre reliées par un pont de matière sensiblement en forme de « M » (non référencé), qui contribue à maintenir les boutons escamotables 12' en position de verrouillage dans les encoches 13' lors du fonctionnement normal du système d'essuie-glace.

La pièce terminale 10' comporte en outre à son extrémité distale une patte en saillie 60 de fixation de la pièce 10' à l'adaptateur 9', cette patte 60 étant destinée à être engagée dans un évidement 61 de l'adaptateur situé du côté intérieur de sa casquette 16'.

Entre sa casquette 16' et ses boutons 12', l'adaptateur 9' comprend un corps qui est configuré pour recevoir les moyens de fixation 53 du dispositif 50 selon l'invention. Le corps de l'adaptateur 9' a ici une forme de U renversé et comprend deux parois latérales 62 sensiblement parallèles et reliées par leurs extrémités supérieures à une paroi supérieure 63, ces parois latérales 62 comportant deux orifices 64 alignés de montage d'un axe d'articulation de l'adaptateur 9' sur le connecteur 7'.

Le corps, la casquette 16' et les boutons 12' de l'adaptateur 9' peuvent être formés d'une seule pièce, par exemple en matériau plastique ou métallique.

La paroi supérieure 63 de l'adaptateur 9' comprend un renfoncement 65 de logement de la paroi supérieure 57 des moyens de fixation 53 du dispositif, et ses parois latérales 62 comprennent chacune une gorge 66 de logement d'une branche 56 des moyens de fixation 53 du dispositif. Les parois 62 et 63 de l'adaptateur peuvent être configurées à l'origine (et avoir par exemple chacune une surépaisseur) pour autoriser la formation ou la présence du renfoncement 65 et des gorges 66. Le renfoncement 65 et chaque gorge 66 peut avoir une profondeur de l'ordre de 2 mm par exemple.

Ces gorges 66 comprennent des flancs 67, respectivement intérieur et extérieur, destinés à coopérer par coulissement ou glissement avec les bords correspondants des branches 56 des moyens de fixation 53 du dispositif. La largeur maximale des branches 56, c'est-à-dire la largeur des branches 56 au niveau des surfaces de guidage 59, est sensiblement égale ou légèrement inférieure à celle entre les flancs 67 des gorges 66, de sorte que ces surfaces coopèrent par glissement avec ces flancs lors du montage du dispositif 50 et assure un positionnement correct du dispositif sur l'adaptateur.

En position de montage, les moyens de fixation 53 du dispositif sont calés et coopèrent par butée avec les flancs 67 des gorges de l'adaptateur, de manière à empêcher tout mouvement du dispositif 50 vis-à-vis du balai 1', dans une direction parallèle à l'axe longitudinal de ce dernier. Le montage des moyens de fixation 53 du dispositif 50 sur l'adaptateur 9' ne gêne pas le montage de l'adaptateur 9' dans la pièce terminale 10' du bras 1'.

Le système d'essuyage selon l'invention peut être assemblé de la façon suivante.

Le dispositif 50 selon l'invention est positionné comme représenté en figure 2 de façon à ce que ses moyens de fixation 53 soient situés au dessus de l'adaptateur 9' du balai 1' et que les branches 56 de ces moyens de fixation soient situées dans des plans parallèles aux fonds des gorges latérales 66 de l'adaptateur 9'. Le dispositif 50 est ensuite déplacé vers le bas dans une direction parallèle aux plans précités (flèche 68), jusqu'à ce que les branches 56 des moyens de fixation 53 s'engagent dans les gorges 66 de l'adaptateur. Les dents des branches 56 coopèrent avec les flancs 67 des gorges 66 pour faciliter le coulissement et l'insertion des branches dans ces gorges. Le déplacement du dispositif 50 est réalisé jusqu'à ce que la paroi supérieure 57 de ses moyens de fixation 53 soit logée dans le renfoncement 65 du corps de l'adaptateur 9', comme représenté en figure 4.

L'adaptateur 9' est ensuite inséré dans la pièce terminale 10' du bras 8' en engageant la patte de fixation 60 de la pièce terminale 10' dans l'évidement 61 de l'adaptateur 9' (figures 5 et 6) puis en basculant l'adaptateur 9' dans la pièce terminale 10' jusqu'à ce que les boutons 12' de l'adaptateur coopèrent par encliquetage élastique avec la pièce terminale 10', en s'engageant dans les encoches 13' de cette dernière, comme cela est représenté en figure 5.

Les moyens de fixation 53 du dispositif 50 sont alors mis en prise ou pris en sandwich entre la pièce terminale 10' et l'adaptateur 9', ce qui assure la retenue du dispositif 50 vis-à-vis du bras et du balai. On comprend aisément que le verrouillage du balai 1' vis-à-vis du bras 8', au moyen des boutons 12', entraîne le verrouillage du dispositif 50 vis-à-vis du bras 8' et du balai 1'. La canule 55 du dispositif 50 peut ensuite être raccordée au conduit d'amenée de liquide lave-glace.

Dans des variantes de réalisation de l'invention non représentées, la canule 55 du dispositif 50 pourrait avoir une autre orientation ou être dans une autre position, par exemple à une extrémité de la rampe ou au niveau de la paroi supérieure 57 des moyens de fixation. Le dispositif 50 pourrait comprendre plus d'une rampe 54 et par exemple deux rampes 54 portées respectivement par les deux branches 56 des moyens de fixation 53 du dispositif 50. Des moyens de réchauffage du liquide lave-glace peuvent également être intégrés au balai d'essuyage et/ou au dispositif de projection de liquide lave-glace.

## Revendications

1. Dispositif (50) de projection de liquide lave-glace pour un balai d'essuyage (1') de système d'essuie-glace de véhicule, comportant des moyens (52) de projection de liquide lave-glace et des moyens (53) de fixation audit balai d'essuyage (1'), **caractérisé en ce que** les moyens de fixation (53) sont configurés pour être mis en prise, à savoir pris en sandwich entre des moyens (11') de connexion du balai d'essuyage à un bras (8') d'essuie-glace et ledit bras d'essuie-glace, de façon à assurer une tenue mécanique dudit dispositif lorsque les moyens (11') de connexion du balai sont fixés au bras (8').

2. Dispositif (50) selon la revendication 1, dans lequel les moyens de fixation (53) ont une forme de U renversé.

3. Dispositif (50) selon la revendication 1 ou 2, dans lequel les moyens de fixation (53) comprennent des surfaces de guidage (59) configurées pour coopérer avec lesdits moyens de connexion (11') lors du montage du dispositif.

4. Dispositif (50) selon l'une des revendications 1 à 3, dans lequel les moyens de projection (52) comprennent au moins une rampe (54) de projection de liquide lave-glace.

5. Dispositif (50) selon l'une des revendications 1 à 4, comprenant une canule (55) de raccordement des moyens de projection (52) à un conduit d'amenée de liquide lave-glace.

6. Dispositif (50) selon l'une quelconque des revendications 1 à 5, dans lequel les moyens de projection (52) et les moyens de fixation (53) sont formés d'une seule pièce.

7. Balai (1') d'essuyage pour un système d'essuie-glace de véhicule, comprenant des moyens de connexion (11') à un bras (8') d'essuie-glace et un dispositif (50) selon l'une quelconque des revendications précédentes.

8. Balai (1') d'essuyage selon la revendication 7, dans lequel les moyens de fixation (53) du dispositif (50) sont montés à cheval sur les moyens de connexion (11') et comprennent deux branches (56) latérales et sensiblement parallèles s'étendant de part et d'autre des moyens de connexion (11 ').

9. Balai (1') d'essuyage selon la revendication 8, dans lequel les branches (56) des moyens de fixation (53) du dispositif (50) sont montées par coulissement dans des gorges latérales (66) des moyens de connexion (11').

10. Balai d'essuyage (1') selon la revendication 9, dans lequel les branches (56) comprennent des surfaces (59) de guidage configurées pour coopérer avec des flancs (67) des gorges (66) des moyens de connexion (11').

11. Balai d'essuyage (1') selon l'une des revendications 7 à 10, dans lequel les moyens de connexion (11') comprennent un adaptateur (9') articulé sur un connecteur mécanique (7'), les moyens de fixation (53) du dispositif (50) étant configurés pour être montés sur ledit adaptateur.

12. Balai (1') d'essuyage selon l'une des revendications 7 à 11, dans lequel les moyens de connexion (11') comprennent des moyens de verrouillage (12') configurés pour coopérer avec le bras (8') et assurer à la fois le verrouillage du balai (1') et du dispositif (50) vis-à-vis du bras.

13. Système d'essuie-glace de véhicule, comportant un balai (1') d'essuyage selon l'une des revendications 7 à 12 et un bras (8') d'essuie-glace, ce bras comprenant une pièce terminale (10') de fixation aux moyens (11') de connexion du balai, cette pièce terminale (10') étant configurée pour coiffer les moyens de fixation (53) du dispositif et assurer leur retenue sur les moyens de connexion (11') du balai.

14. Procédé de montage d'un dispositif (50) de projection de liquide lave-glace sur un balai (1') d'essuyage de système d'essuie-glace de véhicule, comprenant les étapes de montage de moyens de fixation (53) du dispositif au niveau de moyens de connexion (11') du balai d'essuyage à un bras (8') d'essuie-glace, et de montage du bras (8') sur ces moyens de connexion (11'), de sorte que les moyens de fixation (53) du dispositif soient mis en prise, à savoir pris en sandwich entre les moyens de connexion (11') et le bras (8'), de façon à assurer une tenue mécanique dudit dispositif lorsque les moyens (11') de connexion du balai sont fixés au bras (8').

15. Procédé selon la revendication 14, dans lequel le verrouillage des moyens de connexion (11') vis-à-vis du bras (8') entraîne le verrouillage du dispositif (50) vis-à-vis du bras (8').

## Patentansprüche

1. Vorrichtung (50) zum Spritzen von Scheibenwaschflüssigkeit für ein Wischblatt (1') eines Scheibenwischersystems eines Fahrzeugs, welche Mittel (52) zum Spritzen von Scheibenwaschflüssigkeit und Mittel (53) zur Befestigung am Wischblatt (1') aufweist, **dadurch gekennzeichnet, dass** die Befestigungsmittel (53) dafür ausgelegt sind, zwischen Mitteln (11') zur Verbindung des Wischblattes mit einem Scheibenwischerarm (8') und diesem Scheibenwischerarm in Eingriff gebracht, nämlich sandwichartig angeordnet zu werden, um so eine mechanische Festigkeit der Vorrichtung sicherzustellen, wenn die Verbindungsmittel (11') des Wischblattes am Arm (8') befestigt sind.

2. Vorrichtung (50) nach Anspruch 1, wobei die Befestigungsmittel (53) eine Form eines umgekehrten "U" aufweisen.

3. Vorrichtung (50) nach Anspruch 1 oder 2, wobei die Befestigungsmittel (53) Führungsflächen (59) aufweisen, die dafür ausgelegt sind, bei der Montage der Vorrichtung mit den Verbindungsmitteln (11') zusammenzuwirken.

4. Vorrichtung (50) nach einem der Ansprüche 1 bis 3, wobei die Spritzmittel (52) wenigstens eine Rampe (54) zum Spritzen von Scheibenwaschflüssigkeit umfassen.

5. Vorrichtung (50) nach einem der Ansprüche 1 bis 4, welche ein Röhrchen (55) zum Anschluss der Spritzmittel (52) an eine Leitung zur Zuführung von Scheibenwaschflüssigkeit umfasst.

6. Vorrichtung (50) nach einem der Ansprüche 1 bis 5, wobei die Spritzmittel (52) und die Befestigungsmittel (53) aus einem Stück ausgebildet sind.

7. Wischblatt (1') für ein Scheibenwischersystem eines Fahrzeugs, welches Mittel (11') zur Verbindung mit einem Scheibenwischerarm (8') und eine Vorrichtung (50) nach einem der vorhergehenden Ansprüche umfasst.

8. Wischblatt (1') nach Anspruch 7, wobei die Befestigungsmittel (53) der Vorrichtung (50) auf den Verbindungsmitteln (11') aufsitzend angebracht sind und zwei seitliche und im Wesentlichen parallele Schenkel (56) umfassen, die sich beiderseits der Verbindungsmittel (11') erstrecken.

9. Wischblatt (1') nach Anspruch 8, wobei die Schenkel (56) der Befestigungsmittel (53) der Vorrichtung (50) in seitlichen Rillen (66) der Verbindungsmittel (11') gleitend angebracht sind.

10. Wischblatt (1') nach Anspruch 9, wobei die Schenkel (56) Führungsflächen (59) umfassen, die dafür ausgelegt sind, mit Flanken (67) der Rillen (66) der Verbindungsmittel (11') zusammenzuwirken.

11. Wischblatt (1') nach einem der Ansprüche 7 bis 10, wobei die Verbindungsmittel (11') einen Adapter (9') umfassen, der an einem mechanischen Verbinder (7') angelenkt ist, wobei die Befestigungsmittel (53) der Vorrichtung (50) dafür ausgelegt sind, an dem Adapter angebracht zu werden.

12. Wischblatt (1') nach einem der Ansprüche 7 bis 11, wobei die Verbindungsmittel (11') Verriegelungsmittel (12') umfassen, die dafür ausgelegt sind, mit dem Arm (8') zusammenzuwirken und gleichzeitig die Verriegelung des Wischblattes (1') und der Vorrichtung (50) bezüglich des Armes sicherzustellen.

13. Scheibenwischersystems eines Fahrzeugs, welches ein Wischblatt (1') nach einem der Ansprüche 7 bis 12 und einen Scheibenwischerarm (8') aufweist, wobei dieser Arm ein Endstück (10') zur Befestigung an den Verbindungsmitteln (11') des Wischblattes umfasst, wobei dieses Endstück (10') dafür ausgelegt ist, die Befestigungsmittel (53) der Vorrichtung zu bedecken und ihren Halt an den Verbindungsmitteln (11') des Wischblattes sicherzustellen.

14. Verfahren zur Montage einer Vorrichtung (50) zum Spritzen von Scheibenwaschflüssigkeit an einem Wischblatt (1') eines Scheibenwischersystems eines Fahrzeugs, welches die Schritte der Anbringung von Befestigungsmitteln (53) der Vorrichtung im Bereich von Mitteln zur Verbindung (11') des Wischblattes mit einem Scheibenwischerarm (8') und der Anbringung des Armes (8') an diesen Verbindungsmitteln (11') umfasst, derart, dass die Befestigungsmittel (53) der Vorrichtung zwischen den Verbindungsmitteln (11') und dem Arm (8') in Eingriff gebracht, nämlich sandwichartig angeordnet zu werden, um so eine mechanische Festigkeit der Vorrichtung sicherzustellen, wenn die Verbindungsmittel (11') des Wischblattes am Arm (8') befestigt sind.

15. Verfahren nach Anspruch 14, wobei die Verriegelung der Verbindungsmittel (11') bezüglich des Armes (8') die Verriegelung der Vorrichtung (50) bezüglich des Armes (8') zur Folge hat.

## Claims

1. Device (50) for spraying windscreen washer liquid for a wiper (1') of a vehicle windscreen wiping system, comprising means (52) for spraying windscreen washer liquid and means (53) for fixing to said wiper (1'), **characterized in that** the fixing means (53) are configured to be engaged, namely sandwiched between means (11') for connecting the wiper to a windscreen wiper arm (8') and said windscreen wiper arm, so as to ensure that said device is mechanically held when said connecting means (11') are fixed to the arm (8') .

2. Device (50) according to Claim 1, in which the fixing means (53) are in the form of an inverted U.

3. Device (50) according to Claim 1 or 2, in which the fixing means (53) comprise guiding surfaces (59) configured to cooperate with said connection means (11') when mounting the device.

4. Device (50) according to one of Claims 1 to 3, in which the spraying means (52) comprise at least one windscreen washer liquid spraying boom (54).

5. Device (50) according to one of Claims 1 to 4, comprising a nozzle (55) for coupling the spraying means (52) to a windscreen washer liquid supply duct.

6. Device (50) according to any one of Claims 1 to 5, in which the spraying means (52) and the fixing means (53) are formed of a single piece.

7. Wiper (1') for a vehicle windscreen wiping system, comprising means (11') for connecting to a windscreen wiper arm (8') and a device (50) according to any one of the preceding claims.

8. Wiper (1') according to Claim 7, in which the fixing means (53) of the device (50) are mounted straddling the connection means (11') and comprise two lateral and substantially parallel branches (56) extending on either side of the connection means (11') .

9. Wiper (1') according to Claim 8, in which the branches (56) of the fixing means (53) of the device (50) are mounted by sliding in lateral grooves (66) of the connection means (11').

10. Wiper (1') according to Claim 9, in which the branches (56) comprise guiding surfaces (59) configured to cooperate with flanks (67) of the grooves (66) of the connection means (11').

11. Wiper (1') according to one of Claims 7 to 10, in which the connection means (11') comprise an adapter (9') articulated on a mechanical connector (7'), the fixing means (53) of the device (50) being configured to be mounted on said adapter.

12. Wiper (1') according to one of Claims 7 to 11, in which the connection means (11') comprise locking means (12') configured to cooperate with the arm (8') and ensure both the locking of the wiper (1') and of the device (50) with respect to the arm.

13. Vehicle windscreen wiping system, comprising a wiper (1') according to one of Claims 7 to 12 and a windscreen wiper arm (8'), this arm comprising a terminal part (10') for fixing to the connection means (11') of the wiper, this terminal part (10') being configured to cap the fixing means (53) of the device and ensure that they are retained on the connection means (11') of the wiper.

14. Method for mounting a device (50) for spraying windscreen washer liquid on a wiper (1') of a vehicle windscreen wiping system, comprising the steps of mounting means (53) for fixing the device at the level of connection means (11') of the wiper to a windscreen wiper arm (8'), and of mounting the arm (8') on these connection means (11'), such that the fixing means (53) of the device are engaged, namely sandwiched between the means (11') for connecting the wiper to the windscreen wiper arm (8') and said windscreen wiper arm, so as to ensure that said device is mechanically held when said connecting means (11') are fixed to the arm (8').

15. Method according to Claim 14, in which the locking of the connection means (11') with respect to the arm (8') leads to the locking of the device (50) with respect to the arm (8').
